(19) Europäisches Patentamt
European Patent Office
Office européen des brevets

(11) **EP 3 075 443 B1**

(12) **FASCICULE DE BREVET EUROPEEN**

(45) Date de publication et mention
de la délivrance du brevet:
**04.10.2017 Bulletin 2017/40**

(51) Int Cl.:
***B01J 8/04*** *(2006.01)*

(21) Numéro de dépôt: **16159145.8**

(22) Date de dépôt: **08.03.2016**

(54) **DISPOSITF DE MÉLANGE ET DE DISTRIBUTION COMPRENANT UN PLÂTEAU DE DISTRIBUTION AVEC OUVERTURES PÉRIPHÉRIQUES**

MISCH- UND VERTEILVORRICHTUNG, DIE EINE VERTEILPLATTFORM MIT PERIPHEREN ÖFFNUNGEN UMFASST

MIXING AND DISTRIBUTION DEVICE COMPRISING A DISTRIBUTION PLATE WITH PERIPHERAL OPENINGS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2015 FR 1552784**

(43) Date de publication de la demande:
**05.10.2016 Bulletin 2016/40**

(73) Titulaire: **IFP Énergies nouvelles**
**92852 Rueil-Malmaison Cedex (FR)**

(72) Inventeurs:
• **BEARD, Philippe**
**69230 Saint Genis-Laval (FR)**
• **BAZER-BACHI, Frederic**
**69540 Irigny (FR)**
• **PLAIS, Cecile**
**69420 Les Haies (FR)**
• **AUGIER, Frederic**
**69360 Saint Symphorien d'Ozon (FR)**
• **HAROUN, Yacine**
**69520 Grigny (FR)**

(56) Documents cités:
WO-A1-2014/122073     FR-A1- 2 952 835
FR-A1- 2 989 006

**Description**

**Domaine technique**

La présente invention s'applique dans le domaine des réactions exothermiques et plus particulièrement aux réactions d'hydrotraitement, d'hydrodésulfuration, d'hydrodéazotation, d'hydrocraquage, d'hydrogénation, d'hydrodéoxygénation ou encore d'hydrodéaromatisation réalisées dans un réacteur en lit fixe. L'invention concerne plus particulièrement un dispositif de mélange et de distribution de fluides dans un réacteur à écoulement descendant et son utilisation pour la réalisation de réactions exothermiques.

**Etat de la technique**

Les réactions exothermiques réalisées par exemple en raffinage et/ou en pétrochimie nécessitent d'être refroidies par un fluide additionnel, appelé fluide de trempe, pour éviter un emballement thermique du réacteur catalytique dans lequel elles sont effectuées. Les réacteurs catalytiques utilisés pour ces réactions comprennent généralement au moins un lit de catalyseur solide. Le caractère exothermique des réactions nécessite de conserver un gradient de température homogène au sein du réacteur afin d'éviter l'existence de points chauds dans le lit de catalyseur compris dans le réacteur. Des zones trop chaudes peuvent diminuer prématurément l'activité du catalyseur et/ou conduire à des réactions non sélectives et/ou conduire à des emballements thermiques. Il est donc important de disposer d'au moins une chambre de mélange dans un réacteur, située entre deux lits de catalyseur, qui permette une répartition homogène en température des fluides sur une section de réacteur et un refroidissement des fluides réactionnels à une température désirée.

Pour effectuer cette homogénéisation l'homme de l'art est souvent conduit à utiliser un agencement spécifique d'internes souvent complexes comportant une introduction du fluide de trempe la plus homogène possible dans la section du réacteur. Par exemple, le document FR 2 824 495 A1 décrit un dispositif de trempe permettant d'assurer un échange efficace entre le ou les fluide(s) de trempe et le ou les fluide(s) du procédé. Ce dispositif est intégré dans une enceinte et comprend une canne d'injection du fluide de trempe, un baffle de collecte des fluides, la boite de trempe proprement dite, opérant le mélange entre le fluide de trempe et l'écoulement descendant, et un système de distribution composé d'une cuvette perforée et d'un plateau de distribution. La boîte de trempe comporte un déflecteur assurant la mise en mouvement tourbillonnaire des fluides selon une direction sensiblement non radiale et non parallèle à l'axe de ladite enceinte et en aval du déflecteur, dans le sens de circulation du fluide réactionnel, au moins une section de passage de sortie du mélange de fluides formé dans la boîte. Ce dispositif permet de pallier certains inconvénients des différents systèmes de l'art antérieur mais reste encombrant.

Pour remédier au problème d'encombrement, un dispositif de mélange de fluides dans un réacteur à écoulement descendant a été développé, et est décrit dans le document FR 2 952 835 A1. Ce dispositif comprend un moyen de collecte horizontal pourvu d'une conduite de collecte verticale pour recevoir les fluides, un moyen d'injection placé dans la conduite de collecte, et une chambre de mélange annulaire de section circulaire située en aval du moyen de collecte dans le sens de circulation des fluides. La chambre de mélange comprend une extrémité d'entrée reliée à la conduite de collecte et une extrémité de sortie permettant le passage des fluides, ainsi qu'un plateau de pré-distribution horizontal comprenant au moins une cheminée. L'avantage de ce dispositif est qu'il est plus compact que celui décrit précédemment, et permet d'assurer un bon mélange des fluides et une bonne homogénéité en température.

Un but de l'invention est de proposer un dispositif de mélange et un dispositif de distribution de fluides peu encombrants lorsqu'ils sont placés dans un réacteur catalytique. Un autre but de la présente invention est de proposer un dispositif de mélange et de distribution ayant une bonne efficacité de mélange de fluides et présentant une bonne homogénéité en température, et une bonne distribution.

La Demanderesse a mis au point un dispositif de mélange et de distribution de fluides combiné, permettant de diminuer de manière significative l'espace dédié au mélange et à la distribution de fluides notamment dans un réacteur à écoulement descendant.

**Objets de l'invention**

Un premier objet de l'invention concerne un dispositif de mélange et de distribution de fluides pour un réacteur catalytique à écoulement descendant, ledit dispositif comprenant :

- au moins une zone de collecte (A) comprenant au moins un moyen de collecte ;
- au moins une conduite de collecte sensiblement verticale apte à recevoir un fluide réactionnel collecté par ledit moyen de collecte et au moins un moyen d'injection débouchant dans ladite conduite de collecte pour injecter un fluide de trempe ;

- au moins une zone de mélange (B), située en aval du moyen de collecte dans le sens de circulation des fluides, ladite zone de mélange (B) comprenant au moins une chambre de mélange reliée à ladite conduite de collecte et une extrémité de sortie pour évacuer les fluides ;
- au moins une zone de distribution (C), située en aval de ladite zone de mélange (B) dans le sens de la circulation des fluides, comprenant un plateau de distribution s'étendant radialement sur toute la section de l'enceinte du réacteur, ledit plateau de distribution comportant au moins une première zone (C1) supportant une pluralité de cheminées et une seconde zone (C2) ;

caractérisé en ce que ladite zone de mélange (B) est comprise dans une enceinte annulaire située dans la zone de distribution (C), lesdites zones de mélange (B) et de distribution (C) étant délimitées par au moins une paroi annulaire comprenant au moins une section de passage latéral apte au passage des fluides de ladite zone de mélange (B) à la première zone (C1) de ladite zone de distribution (C), et en ce que la seconde zone (C2) de ladite zone de distribution (C) comprend une pluralité d'ouvertures aptes au passage en partie des fluides hors de la zone de distribution (C).

Avantageusement, ladite enceinte annulaire est située à une distance D du plateau de distribution comprise entre 50 et 200 mm.

De préférence, ladite paroi annulaire de ladite enceinte annulaire est positionnée à une distance d2 de l'enceinte du réacteur, la distance d2 variant de 2% à 20% du diamètre du réacteur.

Avantageusement, ladite chambre de mélange est positionnée à une distance d1 de l'enceinte du réacteur, ladite distance d1 étant comprise entre 5 et 300 mm.

De préférence, la hauteur de ladite enceinte annulaire est comprise entre 200 et 800 mm.

Avantageusement, ladite paroi annulaire comprend une pluralité de sections de passage latéral réparties sur au moins deux niveaux.

De préférence, la paroi annulaire de l'enceinte annulaire est sensiblement cylindrique.

Avantageusement, la section de la chambre de mélange est de section en parallélogramme.

De préférence, la section de la chambre de mélange présente un rapport entre la hauteur « h » de la section et la largeur « l » de ladite section est compris entre 0,2 et 5,0. Dans un autre mode de réalisation, ladite chambre de mélange est de section en cercle et est telle que le diamètre «d» de ladite chambre de mélange est compris entre 0,05 et 0,5 m.

Avantageusement, le dispositif selon l'invention comprend deux chambres de mélange.

De préférence, ladite chambre de mélange comprend au moins un moyen de déviation des fluides sur au moins une des parois internes de ladite chambre de mélange.

Avantageusement, le dispositif selon l'invention comprend en outre un système dispersif disposé au-dessous dudit plateau de distribution, ledit système dispersif comprenant un moins un dispositif de dispersion.

Avantageusement, lesdites zones de mélange (B) et de distribution (C) sont délimitées par deux parois annulaires comprenant chacune au moins une section de passage latéral apte au passage des fluides de ladite zone de mélange (B) à la première zone (C1) de ladite zone de distribution (C).

Un autre objet de l'invention concerne un réacteur catalytique à écoulement descendant comportant une enceinte renfermant au moins deux lits fixes de catalyseur séparés par une zone intermédiaire comportant un dispositif de mélange et de distribution de fluides selon l'invention.

**Description des figures**

La figure 1 représente une coupe axiale d'un réacteur catalytique à écoulement descendant comprenant au moins deux lits de catalyseur solide, et comprenant un dispositif compact de mélange et de distribution de fluides selon l'art antérieur. La flèche en gras représente le sens d'écoulement des fluides dans le réacteur.

La figure 2 représente une coupe axiale d'un réacteur catalytique à écoulement descendant comprenant au moins deux lits de catalyseur solide, et comprenant un dispositif compact de mélange et de distribution de fluides selon l'invention. La flèche en gras représente le sens d'écoulement des fluides dans le réacteur. Dans la figure 2, par souci de clarté, la chambre de mélange n'a pas été représentée.

La figure 3 représente une section du dispositif compact de mélange et de distribution de fluides selon la coupe représentée par la ligne X-X' en pointillé sur la figure 2.

La figure 4 représente une coupe axiale du dispositif de mélange et de distribution selon l'invention.

**Description détaillée de l'invention**

Le dispositif compact de mélange et de distribution selon l'invention est utilisé dans un réacteur dans lequel s'effectuent des réactions exothermiques telles que des réactions d'hydrotraitement, d'hydrodésulfuration, d'hydrodéazotation, d'hydrocraquage, d'hydrogénation ou encore d'hydrodéaromatisation. Généralement, le réacteur a une forme allongée le long d'un axe sensiblement vertical. On fait circuler du haut vers le bas dudit réacteur au moins un fluide réactionnel (appelé aussi « process fluid» selon la terminologie anglo-saxonne) à travers au moins un lit de catalyseur. En sortie de chaque lit à l'exception du dernier, le fluide réactionnel est recueilli puis est mélangé à un fluide de trempe (appelé aussi « quench fluid » selon la terminologie anglo-saxonne) dans ledit dispositif avant d'être distribué au lit de catalyseur situé en aval d'un plateau de distribution. L'aval et l'amont sont définis par rapport au sens de l'écoulement du fluide réactionnel. Le fluide réactionnel peut être un gaz ou un liquide ou un mélange contenant du liquide et du gaz ; cela dépend du type de réaction effectuée dans le réacteur.

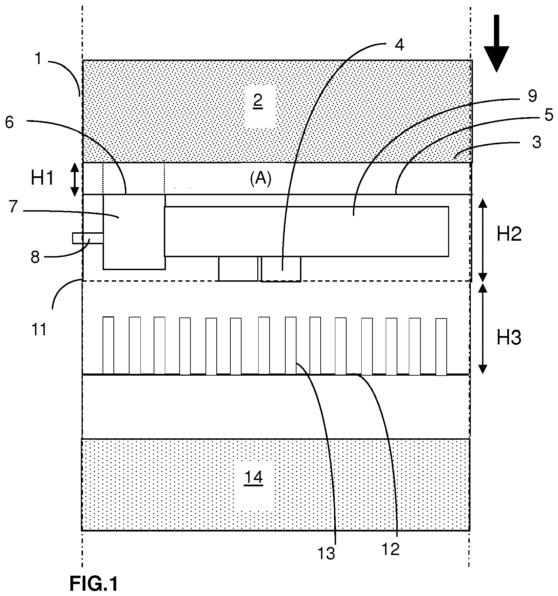

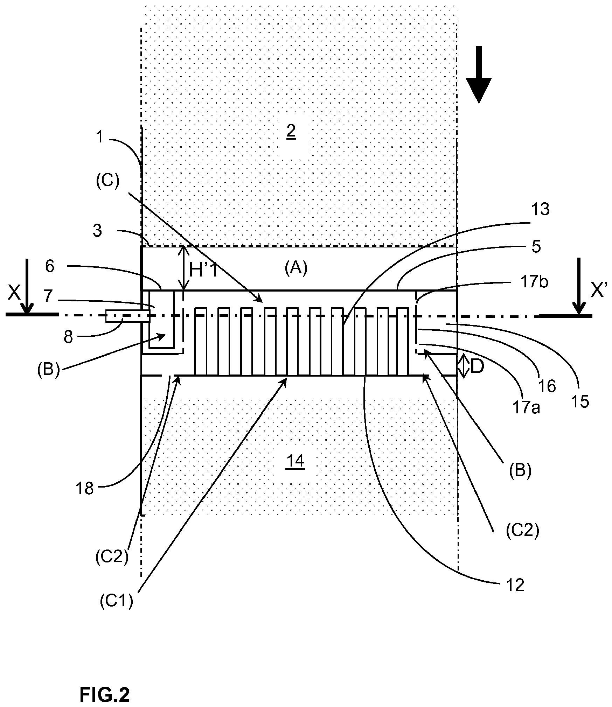

De manière à mieux comprendre l'invention, la description donnée ci-après à titre d'exemple d'application concerne un dispositif de mélange et de distribution utilisé dans un réacteur adapté pour les réactions d'hydrotraitement. La description de la figure 1 se rapporte à un dispositif de mélange et de distribution selon l'art antérieur, la description des figures 2 à 4 se rapporte à un dispositif de mélange et de distribution selon l'invention. Les figures 2 à 4 reprennent certains éléments de la figure 1 ; les références des figures 2 à 4 identiques à celles de la figure 1 désignent les mêmes éléments. Bien entendu, le dispositif selon l'invention peut, sans sortir du cadre de l'invention, être utilisé dans tout réacteur ou dispositif et dans tout domaine où il est souhaitable d'obtenir un bon mélange et une bonne distribution de fluides.

La figure 1 illustre un dispositif de mélange et de distribution selon l'art antérieur disposé dans un réacteur **1** de forme allongée le long d'un axe sensiblement vertical dans lequel on fait circuler du haut vers le bas au moins un fluide réactionnel à travers deux lits de catalyseur **2** et **14.** Le fluide réactionnel peut être un gaz (ou un mélange de gaz) ou un liquide (ou un mélange de liquide) ou un mélange contenant du liquide et du gaz. Le dispositif de mélange et de distribution est disposé sous le lit de catalyseur **2,** par rapport à l'écoulement du fluide réactionnel dans l'enceinte **1.** Une grille de support 3 permet de porter le lit de catalyseur **2** de manière à dégager un espace de collecte (A) sous celui-ci (appelé aussi ici zone de collecte (A)). La hauteur H1 de l'espace de collecte (A) est typiquement compris entre 10 et 300 mm. Cet espace de collecte ou zone de collecte (A) permet de collecter l'écoulement issu du lit de catalyseur **2** au niveau du moyen de collecte **5.** Le moyen de collecte **5,** aussi appelé baffle, est une plaque pleine uniquement ouverte en un emplacement **6** pour drainer l'écoulement du fluide vers la chambre de mélange annulaire **9.** Le fluide réactionnel issu du lit **2** est ainsi contraint dans la zone de collecte (A) à passer par la conduite de collecte verticale **7** qui communique avec l'ouverture **6.** Un fluide de trempe est injecté dans la conduite de collecte **7** via une conduite d'injection **8.** Le fluide de trempe peut être liquide ou gazeux ou mélange contenant du liquide ou du gaz. Ladite chambre **9** est reliée par son extrémité d'entrée à la conduite de collecte **7.** Le fluide de trempe et le fluide réactionnel issu du lit supérieur **2** sont ainsi forcés à emprunter ladite chambre **9** dans laquelle ils se mélangent en subissant un écoulement rotatif. En sortie de ladite chambre, le mélange des fluides s'écoule sur le plateau de pré-distribution **11** situé en aval de la chambre de mélange **9,** dans le sens de la circulation des fluides. Typiquement, la hauteur H2 (cf. figure 1) prise entre le moyen de collecte **5** et la plaque de pré-distribution **11** est comprise entre 300 et 600 mm. La chambre de mélange **9** est positionnée à la périphérie du réacteur. Les phases gaz et liquide du mélange se séparent sur la plaque perforée **11,** qui est munie d'une ou plusieurs cheminées centrales **4** configurées pour permettre le passage du gaz. Le liquide passe par les perforations de la plaque pour former un écoulement de type pommeau de douche ou pluie. Le rôle de la plaque perforée **11** est de distribuer l'écoulement sortant de la chambre de mélange **9** pour alimenter le plateau de distribution **12** de manière relativement équilibrée, ledit plateau de distribution **12** étant positionnée en aval de la plaque de pré-distribution 11, dans le sens de la circulation des fluides. Typiquement, la hauteur H3 (cf. figure 1) mesurée entre la plaque de pré-distribution **11** et le plateau de distribution **12** est comprise entre 100 et 700 mm. Le plateau de distribution **12,** comprend des cheminées **13,** ayant pour rôle de redistribuer les phases gaz et liquide en entrée du lit de catalyseur **14** situé en aval de ce plateau de distribution.

Le dispositif de mélange et de distribution selon l'art antérieur comprend donc une zone de mélange et une zone de distribution positionnées l'une au-dessus de l'autre, de manière étagée. Le mélange des fluides est réalisé sur une hauteur H2 et la distribution des fluides est réalisée sur une hauteur H3. Par conséquent, l'encombrement total H dans l'enceinte **1** d'un dispositif de mélange et de distribution selon l'art antérieur est égal à H1 + H2 + H3 (cf. figure 1).

La demanderesse a mis au point un nouveau dispositif de mélange et de distribution de fluides, plus compact que celui décrit précédemment, et présentant un bon mélange des phases et une bonne distribution sur le lit de catalyseur situé en-dessous de tels dispositifs.

La figure 2 représente un dispositif de mélange et de distribution selon l'invention disposé dans un réacteur **1** de forme allongée le long d'un axe sensiblement vertical dans laquelle on fait circuler du haut vers le bas au moins un fluide réactionnel à travers au moins un lit de catalyseur **2.** Le dispositif selon l'invention est disposé sous le lit de catalyseur **2,** par rapport à l'écoulement du fluide réactionnel dans l'enceinte **1.** Une grille de support **3** permet de supporter le lit de catalyseur **2** de manière à dégager une zone de collecte (A) disposée sous le lit de catalyseur **2**. La zone de collecte (A) est nécessaire pour permettre le drainage du fluide réactionnel jusqu'à une conduite de collecte **7** (qui sera décrite ci-après). Le fluide réactionnel qui s'écoule est par exemple composé d'une phase gaz et d'une phase liquide. Plus particulièrement, le fluide réactionnel traversant le lit de catalyseur **2** en amont est collecté par un moyen de collecte **5** (appelé aussi ici baffle de collecte) sensiblement horizontal conduisant à une conduite de collecte **7** sensiblement verticale, disposée soit en-dessous de la zone de collecte (A) au niveau d'une zone appelée zone de mélange (B) (telle que représentée en figure 2), soit au niveau de la zone de collecte (A) (non représentée sur les figures). Par sensiblement vertical(e) et par sensiblement horizontal(e), on entend au sens de la présente invention une variation d'un plan avec la verticale, respectivement l'horizon, d'un angle θ compris entre ± 5 degrés. Le moyen de collecte **5** est constitué d'une plaque pleine disposée dans le plan perpendiculaire à l'axe longitudinal de l'enceinte sous la grille de support **3** du lit de catalyseur **2**. La plaque du moyen de collecte **5** s'étend radialement sur toute la surface du réacteur **1**. Elle comporte à son extrémité une ouverture **6** à laquelle est reliée ladite conduite de collecte **7**. Le moyen de collecte **5** permet de recueillir l'écoulement du fluide réactionnel provenant du lit catalytique **2** en amont et de le diriger vers ladite conduite de collecte **7**. Le moyen de collecte **5** est distant de la grille de support **3** du lit de catalyseur **2** d'une hauteur H'1. La hauteur H'1 est choisie de manière à limiter la perte de charge lors de la collecte du fluide s'écoulant du lit de catalyseur **2** et à limiter la hauteur de garde, i.e. la hauteur formée par le liquide accumulé dans le moyen de collecte **5**. La hauteur de garde ne modifie pas le drainage du fluide réactionnel vers la conduite de collecte **7**, ni son écoulement dans cette conduite, ni son écoulement à travers le lit catalytique supérieur **2**. Lorsque la conduite de collecte **7** et le moyen d'injection **8** sont situés au niveau de la zone de mélange (B), la hauteur H'1 est comprise entre 10 et 200 mm, de préférence entre 30 et 150 mm, de manière encore plus préférée entre 40 et 100 mm. Ainsi, le fluide réactionnel issu du lit **2** est contraint dans la zone de collecte (A) à passer par la conduite de collecte verticale **7**. Lorsque la conduite de collecte **7** et le moyen d'injection **8** sont situés au niveau de la zone de collecte (A), la hauteur H'1 est comprise entre 10 et 400 mm, de préférence entre 30 et 300 mm, et encore plus préférentiellement entre 50 et 250 mm.

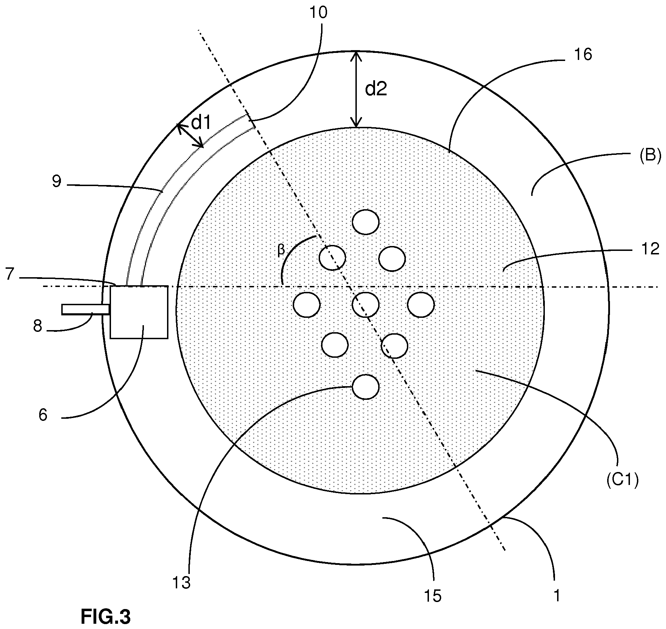

En-dessous de la zone de collecte (A) se trouve une zone de mélange (B) et une zone de distribution (C). La zone de mélange (B) comprend une chambre de mélange **9** (cf. figure 3) située en aval du moyen de collecte **5** dans le sens de circulation des fluides. La chambre de mélange **9** comprend une extrémité d'entrée directement reliée à la conduite de collecte **7** et une extrémité de sortie **10** pour évacuer les fluides. Les considérations techniques de la conduite de collecte **7** et du moyen d'injection **8** sont identiques de celles du dispositif de mélange et de distribution selon l'art antérieur.

La zone de distribution (C) quant à elle comprend un plateau de distribution **12** s'étendant radialement sur toute la section de l'enceinte du réacteur. Le plateau de distribution **12** comporte une première zone (C1) supportant une pluralité de cheminées **13** et une seconde zone (C2), située en périphérie de l'enceinte du réacteur.

Une caractéristique de la présente invention réside dans la mise en place de la zone de mélange (B) au même niveau que la zone de distribution (C), lesdites zones de mélange (B) et de distribution (C) étant délimitées par au moins une paroi annulaire **16** comprenant au moins une section de passage latéral apte au passage des fluides de ladite zone de mélange (B) à ladite zone de distribution (C).

Dans une première variante de réalisation de l'invention, la zone de mélange (B) est positionnée dans une enceinte annulaire **15** comprenant ladite paroi annulaire **16**, en périphérie de l'enceinte du réacteur, agencée de manière concentrique à l'enceinte du réacteur, comprenant au moins une paroi annulaire **16** délimitant intérieurement ladite première zone (C1) de la zone de distribution (C), de préférence sensiblement cylindrique. La paroi annulaire **16** comprend au moins une section de passage latéral **17a** ou **17b** apte au passage des fluides de la zone de mélange (B) à la zone de distribution (C). De préférence, la paroi annulaire **16** comprend au moins deux sections de passage latéral **17a** et **17b.**

L'extrémité de sortie **10** de la chambre de mélange **9** (cf. figure 3) débouche dans l'enceinte annulaire **15**. La configuration de la chambre de mélange **9** dans la zone de mélange (B) permet un écoulement tangentiel du mélange de fluides à la fois dans la chambre de mélange elle-même et dans l'enceinte annulaire **15,** cet écoulement tangentiel permettant d'optimiser l'efficacité du mélange. Ainsi le mélange entre le fluide réactionnel et le fluide de trempe continue de s'effectuer au niveau de l'enceinte annulaire **15**. Les dimensions de l'enceinte annulaire **15** sont choisies d'une telle manière qu'elles permettent la rotation du mélange des fluides dans ladite enceinté annulaire **15** avant de pénétrer dans la zone de distribution (C). Selon l'invention, la hauteur H'2 de l'enceinte annulaire **15** est comprise entre 200 et 800 mm, de préférence entre 300 et 700 mm, et encore plus préférentiellement entre 300 et 600 mm.

Dans un mode de réalisation particulier (non représenté sur les figures), l'enceinte annulaire **15** peut être sectionnée, i.e. ladite enceinte comprend deux extrémités. Dans ce mode de réalisation, la longueur de l'enceinte annulaire **15,** définie par l'angle formé par les plans passant par les deux extrémités de ladite enceinte peut être comprise entre 270 et 360 degrés, de préférence entre 315 et 360 degrés.

Dans un mode de réalisation particulier (non représenté sur les figures), l'enceinte annulaire **15** de la zone de mélange (B) comprend au moins une ouverture (perforation), de préférence une pluralité d'ouvertures, permettant de collecter au moins en partie les fluides de la chambre de mélange **9** débouchant dans l'enceinte annulaire **15,** et de distribuer au moins en partie les fluides en périphérie de l'enceinte au-dessus de la seconde zone (C2) du plateau de distribution **12**.

L'enceinte annulaire **15** entoure intérieurement la première zone (C1) de la zone de distribution (C) comprenant une pluralité de cheminées **13** supportée par le plateau de distribution **12**. Plus précisément, les cheminées **13** sont ouvertes à leur extrémité supérieure par une ouverture supérieure et présentent le long de leur paroi latérale une série d'orifices latéraux (non représentée sur les figures). Les orifices latéraux et les ouvertures supérieures sont destinés respectivement au passage séparé de la phase liquide (par les orifices) et de la phase gaz (par l'ouverture supérieure) à l'intérieur des cheminées, de manière à réaliser leur mélange intime à l'intérieur desdites cheminées. La forme des orifices latéraux peut être très variable, généralement circulaire ou rectangulaire, ces orifices étant préférentiellement répartis sur chacune des cheminées selon plusieurs niveaux sensiblement identiques d'une cheminée à l'autre, généralement au moins un niveau, et de préférence de 2 à 10 niveaux, de manière à permettre l'établissement d'une interface aussi régulière que possible entre la phase gaz et la phase liquide.

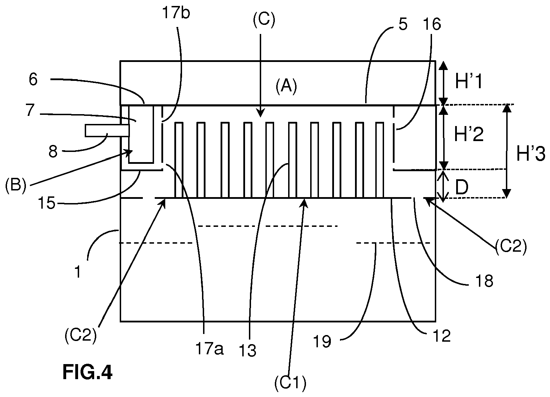

L'enceinte annulaire **15** est située à une distance D du plateau de distribution **12**, la distance D étant comprise entre 50 et 200 mm, de préférence entre 50 et 150 m, et encore plus préférentiellement entre 100 et 150 m (cf. figures 2 ou 4).

Par rapport au dispositif de mélange et de distribution de l'art antérieur, le dispositif de mélange et de distribution selon l'invention ne comprend pas de plaque de pré-distribution **11** munies de cheminées. En effet, selon un aspect essentiel du dispositif selon l'invention, la chambre de mélange **9** est positionnée à la périphérie du réacteur **1**, dans la zone de mélange (B) comprise dans une enceinte annulaire **15**, située au même niveau que la zone de distribution (C). Le mélange et la distribution des fluides ne sont plus réalisés sur deux niveaux distincts. Le dispositif de mélange et de distribution selon l'invention est donc significativement plus compact par rapport à ceux connus de l'art antérieur. Par rapport au dispositif selon l'art antérieur, tel qu'illustré en figure 1, l'encombrement total du dispositif de mélange et de distribution est H = H'1 + H'2 + D = H'1 + H'3 (cf. figure 4), H'2 correspondant à la hauteur de l'enceinte annulaire **15** et H'3 = H'2 + D .

En se reportant aux figures 2 à 4, l'enceinte annulaire **15** est séparée de la zone de distribution (C) par une paroi annulaire **16**, concentrique à l'enceinte du réacteur et de préférence sensiblement cylindrique, comprenant une pluralité de sections de passage latéral **17a** et/ou **17b** permettant le passage du liquide et du gaz issus de la chambre de mélange **9** et circulant dans l'enceinte annulaire **15** de la zone de mélange (B) à la zone de distribution (C). Lesdites sections de passage latéral **17a** et/ou **17b** peuvent se présenter indifféremment sous la forme d'un orifice ou d'une fente.

Avantageusement, la paroi annulaire **16** séparant la zone de mélange (B) de la zone de distribution (C) est située à une distance d2 de l'enceinte du réacteur **1**, la distance d2 étant comprise entre 2 % et 20 % du diamètre du réacteur, préférentiellement entre 3 % et 15% du diamètre du réacteur, encore plus préférentiellement entre 6 % et 12 % du diamètre du réacteur.

Ainsi, l'enceinte annulaire **15** est délimitée du côté externe par l'enceinte du réacteur **1** et du côté interne par ladite paroi annulaire **16**, ladite paroi annulaire **16** étant située dans l'espace compris entre l'enceinte du réacteur 1 et les cheminées **13** situées le plus à l'extérieur, i.e. les cheminées **13** se répartissant sensiblement selon le cercle de plus grand diamètre.

De préférence, la paroi annulaire **16** comprend une pluralité de sections de passage latéral **17a** et/ou **17b** réparties sur au moins un niveau, de préférence au moins deux niveaux. En se reportant à la figure 2, les sections de passage latéral **17a** permettent notamment le passage du liquide de la zone de mélange (B) à la zone de distribution (C) et les sections de passage latéral **17b** permettent notamment le passage du gaz de la zone de mélange (B) à la zone de distribution (C). Dans la zone de distribution (C) du dispositif selon l'invention, les phases gaz et/ou liquide du mélange pénètrent dans ladite zone de distribution (C) au moyen des sections de passage latéral **17a** et **17b** situées sur la paroi annulaire **16**. Le plateau de distribution **12** s'étend radialement sur toute la zone de distribution (C) du dispositif et est disposé dans le plan perpendiculaire à l'axe longitudinal de l'enceinte **1** du réacteur. Ledit plateau de distribution **12** permet d'optimiser la distribution du fluide réactionnel refroidi sur le lit catalytique **14** situé en aval dudit plateau de distribution **12**.

Une autre caractéristique de l'invention réside dans la mise en place d'une pluralité d'ouvertures **18** aménagées sur la seconde zone (C2) du plateau de distribution **12**, située verticalement en-dessous de l'enceinte annulaire **15**, afin de permettre une bonne répartition des fluides au-dessus du second lit de catalyseur **14**. En effet, l'intégration du dispositif de mélange avec le dispositif de distribution empêche la présence de cheminées **13** sur toute la surface du plateau de distribution **12**. Ainsi, la présence d'ouvertures **18** en périphérie de la première zone (C1) permet de distribuer de manière homogène les fluides en périphérie de l'enceinte du réacteur. Les ouvertures **18** sont situées de préférence à une distance minimale de l'enceinte du réacteur, ladite distance minimale étant de 20 mm. Lesdites ouvertures **18** peuvent se présenter indifféremment sous la forme d'un orifice ou d'une fente. Le nombre, la taille et la forme des ouvertures **18** sont choisis par l'homme du métier de manière à assurer la meilleure répartition possible du mélange des fluides en périphérie de l'enceinte du réacteur.

Dans un mode de réalisation selon l'invention, la seconde zone (C2) du plateau de distribution **12** peut comprendre des dispositifs de distribution de liquide (non représentés sur les figures), se présentant sous la forme de tube, munis de sections de passage latéral qui sont des orifices ou des fentes de forme quelconque. La partie inférieure desdits dispositif de distribution de liquide communique avec les ouvertures **18** de la seconde zone (C2) du plateau de distribution **12.**

En se reportant à la figure 3, la chambre de mélange **9** a une forme sensiblement annulaire et peut être de section en parallélogramme ou circulaire. Par section en parallélogramme, on entend toute section à quatre côtés dont les côtés opposés de ladite section sont parallèles deux à deux, par exemple la section en parallélogramme peut être une section rectangulaire, une section carré, ou une section en losange. Par section circulaire, on entend une section en forme de cercle ou en ovale. Quelle que soit la forme de la section de la chambre de mélange **9,** la hauteur ou le diamètre de ladite chambre sera choisie de manière à limiter au maximum la perte de charge et de manière à limiter l'encombrement spatial dans le réacteur.

La longueur de la chambre de mélange **9** est définie par l'angle formé par les plans passant par les deux extrémités de ladite chambre (représenté par l'angle β sur la figure 3). La longueur de ladite chambre est comprise entre 0 et 270 degrés. De manière préférée, la longueur de ladite chambre est comprise entre 30 et 180 degrés, plus préférentiellement entre 90 et 120 degrés. Avantageusement, la chambre de mélange **9** est située à une distance d1 de l'enceinte du réacteur **1,** ladite distance d1 étant comprise entre 5 et 300 mm, préférentiellement entre 5 et 150 mm (cf. figure 3).

Lorsque la section de la chambre de mélange est de section en parallélogramme, les dimensions de la section de hauteur « h » et de largeur « l », sont telles que le ratio entre la hauteur « h » et la largeur « l » est compris entre 0,2 et 5,0 de préférence entre 0,5 et 2,0.

La hauteur « h » de la chambre de mélange est choisie de manière à limiter au maximum la perte de charge et de manière à limiter l'encombrement spatial dans le réacteur. En effet, la perte de charge du dispositif de mélange selon l'invention dépend de la section de la chambre de mélange.

Lorsque la section de la chambre de mélange est de section circulaire (en cercle), le diamètre « d » de ladite chambre de mélange est compris entre 0,05 et 0,5 m, plus préférentiellement entre 0,1 et 0,4 m, préférentiellement entre 0,15 et 0,4 m, encore plus préférentiellement entre 0,15 et 0,25 m, encore plus préférentiellement entre 0,1 et 0,35 m. La perte de charge du dispositif selon l'invention dépend du diamètre dans la chambre de mélange.

La perte de charge suit une loi classique de perte de charge et peut être définie par l'équation suivante :

$$\Delta P = \frac{1}{2} \rho_m V_m^2 \chi \tag{1}$$

où ΔP est la perte de charge, $\rho_m$ la densité moyenne du mélange gaz+liquide dans la chambre de mélange, $V_m$ la vitesse moyenne du mélange gaz+liquide et χ est le coefficient de perte de charge associé au dispositif de mélange. La gamme préférentielle de perte de charge lors du dimensionnement de dispositifs industriels est 0,05 bars < $\Delta P_{max}$ < 0,5 bars (1 bar = $10^5$ Pa), de préférence 0,1 bars < $\Delta P_{max}$ < 0,25 bars.

Selon un mode particulier de réalisation de l'invention, lorsque la section de la chambre de mélange est de section en parallélogramme, la sortie **10** de la chambre de mélange **9** a une hauteur « h' » et/ou une largeur « l' » inférieure à la hauteur « h » et/ou la largeur « l » de la section de la chambre de mélange **9** (hors sortie) afin d'améliorer davantage l'homogénéité du mélange. Le rapport h'/h et/ou l'/l est compris entre 0,5 et 1, de préférence entre 0,7 et 1.

Selon un autre mode particulier de réalisation de l'invention, lorsque la section de la chambre de mélange est de section circulaire, la sortie **10** de la chambre de mélange **9** a un diamètre « d' » inférieure au diamètre « d » de la section de la chambre de mélange **9** (hors sortie) afin d'améliorer davantage l'homogénéité du mélange. Le rapport d'/d est compris entre 0,5 et 1, de préférence entre 0,7 et 1.

Avantageusement, la chambre de mélange **9** peut comprendre au moins un moyen de déviation (non représenté sur les figures) sur au moins une des parois internes de ladite chambre de mélange. La présence d'au moins un moyen de déviation du mélange de fluides traversant ladite chambre permet d'augmenter la surface d'échange entre les deux phases et donc l'efficacité des transferts de chaleur et de matière entre la phase liquide et la phase gazeuse traversant ladite chambre. Ledit moyen de déviation peut se présenter sous plusieurs formes géométriques permettant d'améliorer l'efficacité de la chambre de mélange, étant entendu que lesdites formes permettent une déviation au moins en partie du trajet du mélange de fluides traversant ladite chambre. Par exemple, le moyen de déviation peut se présenter sous la forme d'une chicane, de section triangulaire, carré, rectangulaire, ovoïdale ou toute autre forme de section. Le moyen de déviation peut également se présenter sous la forme d'une ou plusieurs ailette(s) ou bien d'une ou plusieurs pale(s) fixe(s).

Dans un mode de réalisation particulier selon l'invention, deux chambres de mélange **9** peuvent être positionnées dans la zone de mélange (B) afin de réduire la hauteur « h » ou le diamètre « d » desdites chambres de mélange, tout en assurant un bon mélange des fluides et une bonne homogénéité en température. De préférence, les deux chambres de mélange sont diamétralement opposées dans l'enceinte du réacteur. Pour chaque chambre de mélange **9,** une conduite de collecte **7** et un moyen d'injection **8** sont associés.

En-dessous du plateau de distribution **12,** un système de dispersion peut être positionné de manière à distribuer les fluides uniformément sur le lit de catalyseur **14** situé en aval dudit système. Le système de dispersion comprend un ou plusieurs dispositifs de dispersion **19** (cf. figure 4) pouvant être associé à chaque cheminée **13,** être en commun à plusieurs cheminées **13,** ou encore être en commun à l'ensemble des cheminées **13** du plateau de distribution **12.** Chaque dispositif de dispersion **19** a une géométrie sensiblement plane et horizontale, mais peut avoir un périmètre de forme quelconque. Par ailleurs, chaque dispositif de dispersion **19** peut être situé à différente hauteur. Avantageusement, ledit dispositif de dispersion se présente sous la forme de grilles, et peut comprendre éventuellement des déflecteurs.

La distance séparant le système de dispersion du lit de solides granulaires situé immédiatement au-dessous est choisie de manière à conserver l'état de mélange des phases gazeuses et liquide autant que possible tel qu'il est en sortie des cheminées **13.** De préférence, le plateau de distribution **12** et lit de catalyseur **14** située en-dessous dudit plateau de distribution est compris entre 50 et 400 mm, de préférence entre 100 et 300 mm. La distance entre le plateau de distribution **12** et ledit dispositif de dispersion **19** est comprise entre 0 et 400 mm, de préférence entre 0 et 300 mm. Dans un mode de réalisation particulier, le plateau de distribution **12** est posé sur le dispositif de dispersion **19.**

Bien entendu, la variante de réalisation de l'invention présentée ci-avant n'est qu'une illustration de l'invention, et n'est en aucun cas limitatif. D'autres variantes de réalisation du dispositif de mélange et de distribution peuvent être envisagées.

Par exemple la zone de distribution (C) peut être positionnée en périphérie de l'enceinte du réacteur, délimitant intérieurement la zone de mélange (B) par la paroi annulaire **16.** Dans ce mode particulier de réalisation, la première zone (C1) de la zone de distribution (C) est située en périphérie de l'enceinte du réacteur, la seconde zone (C2) est située à l'intérieur de ladite première zone (C1), en-dessous de la zone de mélange (B), à une distance D du plateau de distribution **12** comprise entre 50 et 200 mm, ladite seconde zone (C2) comprenant une pluralité d'ouvertures 18 aptes au passage en partie des fluides hors de ladite zone de distribution (C).

Dans une autre variante de réalisation de l'invention, la zone de mélange est comprise dans l'enceinte annulaire **15,** la position de ladite enceinte annulaire étant telle qu'elle forme deux premières zones (C1,C'1) délimitées chacune par une paroi annulaire **16** comprenant chacune au moins une section de passage latéral apte au passage des fluides de ladite zone de mélange (B) à la zone de distribution (C), et une seconde zone (C2) située en-dessous de ladite zone de mélange (B) à une distance D du plateau de distribution **12** comprise entre 50 et 200 mm, ladite seconde zone (C2) comprenant une pluralité d'ouvertures **18** aptes au passage en partie des fluides hors de ladite zone de distribution (C). Dans cette variante de réalisation, la distance « d2 » est comprise entre l'enceinte du réacteur et la paroi **16** la plus proche de l'enceinte du réacteur, i.e. la paroi de plus grand diamètre.

Par rapport aux dispositifs décrits dans l'art antérieur, et encore plus particulièrement par rapport au dispositif divulgué dans le document FR 2 952 835, le dispositif de mélange et de distribution selon l'invention présente les avantages suivants :

- une compacité accrue du fait de l'intégration à la même hauteur de la zone de mélange et de la zone de distribution des fluides ;
- une bonne efficacité thermique et une bonne efficacité de mélange grâce à l'écoulement rotatif dans la chambre de mélange, dans l'enceinte annulaire, et sur ou au niveau du plateau de distribution.

Exemple

Dans les exemples suivants, on compare le dispositif selon l'invention (Dispositif B) avec un dispositif non conforme à l'invention (Dispositif A). Pour les deux dispositifs, on considère que les hauteurs H1 et H'1 de l'espace de collecte (A) sont identiques et est égales à 120 mm. De la même manière, la hauteur entre le plateau de distribution **12** et le haut du second lit catalytique **14** est fixée à 400 mm. Les comparaisons entre ces deux dispositifs se basent sur leur compacité dans un réacteur catalytique. Ces exemples sont présentés ici à titre d'illustration et ne limitent en aucune manière la portée de l'invention.

Dispositif A (non conforme à l'invention) :

Pour un diamètre de réacteur de 5 m, l'encombrement d'un dispositif de mélange classique, tel que divulgué dans le document FR 2 952 835 A1, compris entre l'extrémité supérieure de la conduite de collecte **7** et le plateau de pré-distribution **11** est d'environ 650 mm. L'encombrement est d'environ 950 mm en ajoutant l'encombrement du plateau de distribution **12** situé en dessous de la plaque de pré-distribution **11** (correspondant à une hauteur H3 = 300 mm).

Ainsi, l'encombrement total d'un dispositif de mélange et de distribution classique pris entre le bas du premier lit catalytique 2 et le haut du second lit catalytique 14 est de 120 + 950 + 400 = 1470 mm.

Dispositif B (conforme à l'invention) :

Pour un diamètre de réacteur de 5 m, la hauteur H'2 de l'enceinte annulaire du dispositif selon l'invention est de 600 mm et la distance « d2 » comprise entre la paroi **16** de l'enceinte annulaire **15** et l'enceinte du réacteur est de 350 mm, permettant la rotation des fluides dans l'enceinte annulaire.

La distance D entre l'enceinte annulaire **15** et le plateau de distribution **12** est de 150 mm.

La hauteur de la zone de distribution H'3 est de 750 mm.

Ainsi, l'encombrement total du dispositif de mélange et de distribution selon l'invention pris entre le bas du premier lit catalytique **2** et le haut du second lit catalytique **14,** est de 120 + 750 + 400 = 1270 mm. Ainsi, à titre de comparaison, le dispositif selon l'invention permet un gain d'espace d'environ 14 % par rapport au dispositif A. L'espace gagné par la compacité du dispositif selon l'invention par rapport au dispositif de l'art antérieur peut être ainsi utilisé pour les lits de catalyseur. Ainsi le dispositif selon l'invention permet d'améliorer également les performances d'un réacteur par une augmentation de la quantité de catalyseur dans les lits catalytiques.

**Revendications**

1. Dispositif de mélange et de distribution de fluides pour un réacteur catalytique à écoulement descendant, ledit dispositif comprenant :

   - au moins une zone de collecte (A) comprenant au moins un moyen de collecte (5) ;
   - au moins une conduite de collecte (7) sensiblement verticale apte à recevoir un fluide réactionnel collecté par ledit moyen de collecte (5) et au moins un moyen d'injection (8) débouchant dans ladite conduite de collecte (7) pour injecter un fluide de trempe ;
   - au moins une zone de mélange (B), située en aval du moyen de collecte (5) dans le sens de circulation des fluides, ladite zone de mélange (B) comprenant au moins une chambre de mélange (9) reliée à ladite conduite de collecte (7) et une extrémité de sortie (10) pour évacuer les fluides ;
   - au moins une zone de distribution (C), située en aval de ladite zone de mélange (B) dans le sens de la circulation des fluides, comprenant un plateau de distribution (12) s'étendant radialement sur toute la section de l'enceinte du réacteur, ledit plateau de distribution (12) comportant au moins une première zone (C1) supportant une pluralité de cheminées (13) et une seconde zone (C2) ;

   **caractérisé en ce que** ladite zone de mélange (B) est comprise dans une enceinte annulaire (15) située dans la zone de distribution (C), lesdites zones de mélange (B) et de distribution (C) étant délimitées par au moins une paroi annulaire (16) comprenant au moins une section de passage latéral (17a, 17b) apte au passage des fluides de ladite zone de mélange (B) à la première zone (C1) de ladite zone de distribution (C), et **en ce que** la seconde zone (C2) de ladite zone de distribution (C) comprend une pluralité d'ouvertures (18) aptes au passage en partie des fluides hors de la zone de distribution (C).

2. Dispositif selon la revendication 1, **caractérisé en ce que** ladite enceinte annulaire (15) est située à une distance D du plateau de distribution (12) comprise entre 50 et 200 mm.

3. Dispositif selon les revendications 1 ou 2, **caractérisé en ce que** ladite paroi annulaire (16) de ladite enceinte annulaire (15) est positionnée à une distance d2 de l'enceinte du réacteur, la distance d2 variant de 2% à 20% du diamètre du réacteur.

4. Dispositif selon l'une quelconque des revendications 1 à 3, **caractérisé en ce que** ladite chambre de mélange (9) est positionnée à une distance d1 de l'enceinte du réacteur, ladite distance d1 étant comprise entre 5 et 300 mm.

5. Dispositif selon l'une quelconque des revendications 1 à 4, **caractérisé en ce que** la hauteur de ladite enceinte annulaire (15) est comprise entre 200 et 800 mm.

6. Dispositif selon l'une quelconque des revendications 1 à 5, **caractérisé en ce que** la paroi annulaire (16) comprend une pluralité de sections de passage latéral (17a,17b) réparties sur au moins deux niveaux.

7. Dispositif selon l'une quelconque des revendications 1 à 6, **caractérisé en ce que** la paroi annulaire (16) de l'enceinte annulaire (15) est sensiblement cylindrique.

8. Dispositif selon l'une quelconque des revendications 1 à 7, **caractérisé en ce que** la section de la chambre de mélange (9) est de section en parallélogramme.

9. Dispositif selon la revendication 8, **caractérisé en ce que** la section de la chambre de mélange (9) présente un rapport entre la hauteur « h » de la section et la largeur « l » de ladite section est compris entre 0,2 et 5,0.

10. Dispositif selon l'une quelconque des revendications 1 à 7, **caractérisé en ce que** ladite chambre de mélange (9) est de section en cercle et est telle que le diamètre «d» de ladite chambre de mélange est compris entre 0,05 et 0,5 m.

11. Dispositif selon l'une quelconque des revendications 1 à 10, **caractérisé en ce qu'**il comprend deux chambres de mélange (9).

12. Dispositif selon l'une quelconque des revendications 1 à 11, **caractérisé en ce que** ladite chambre de mélange (9) comprend au moins un moyen de déviation des fluides sur au moins une des parois internes de ladite chambre de mélange.

13. Dispositif selon l'une quelconque des revendications 1 à 12, **caractérisé en ce qu'**il comprend en outre un système dispersif disposé au-dessous dudit plateau de distribution (12), ledit système dispersif comprenant un moins un dispositif de dispersion (19).

14. Dispositif selon l'une quelconque des revendications 1 à 13, **caractérisé en ce que** lesdites zones de mélange (B) et de distribution (C) sont délimitées par deux parois annulaires (16) comprenant chacune au moins une section de passage latéral (17a, 17b) apte au passage des fluides de ladite zone de mélange (B) à la première zone (C1) de ladite zone de distribution (C).

15. Réacteur catalytique à écoulement descendant comportant une enceinte (1) renfermant au moins deux lits fixes de catalyseur (2,14) séparés par une zone intermédiaire comportant un dispositif de mélange et de distribution de fluides selon l'une quelconque des revendications 1 à 14.

**Patentansprüche**

1. Vorrichtung zum Mischen und Verteilen von Fluiden für einen nach unten durchströmten katalytischen Reaktor, wobei die Vorrichtung umfasst:

   - mindestens eine Sammelzone (A), umfassend mindestens ein Sammelmittel (5);
   - mindestens eine im Wesentlichen vertikale Sammelleitung (7), die geeignet ist, ein von dem Sammelmittel (5) gesammeltes Reaktionsfluid aufzunehmen, und mindestens ein Einspritzmittel (8), das in die Sammelleitung (7) mündet, um ein Härtefluid einzuspritzen,
   - mindestens eine Mischzone (B), die sich stromabwärts zu dem Sammelmittel (5) in Zirkulationsrichtung der Fluid befindet, wobei die Mischzone (B) mindestens eine Mischkammer (9), die mit der Sammelleitung (7) verbunden ist, und ein Austrittsende (10) umfasst, um die Fluide abzuleiten;
   - mindestens eine Verteilungszone (C), die sich stromabwärts zu der Mischzone (B) in Zirkulationsrichtung der Fluide befindet, umfassend eine Verteilungsplatte (12), die sich radial über den gesamten Querschnitt des Raums des Reaktors erstreckt, wobei die Verteilungsplatte (12) mindestens eine erste Zone (C1), die eine Vielzahl von Abzügen (13) trägt, und eine zweite Zone (C2) umfasst;

   **dadurch gekennzeichnet, dass** die Mischzone (B) in einem ringförmigen Raum (15) enthalten ist, die sich in der Verteilungszone (C) befindet, wobei die Mischzone (B) und die Verteilungszone (C) von mindestens einer ringförmigen Wand (16) begrenzt sind, umfassend mindestens einen seitlichen Durchgangsquerschnitt (17a, 17b), der für den Durchgang der Fluide von der Mischzone (B) zu der ersten Zone (C1) der Verteilungszone (C) geeignet ist, und dass die zweite Zone (C2) der Verteilungszone (C) eine Vielzahl von Öffnungen (18) umfasst, die für den teilweisen Durchgang der Flüssigkeiten aus der Verteilungszone (C) geeignet sind.

2. Vorrichtung nach Anspruch 1, **dadurch gekennzeichnet, dass** der ringförmige Raum (15) in einem Abstand D zur Verteilungsplatte (12) zwischen 50 und 200 mm angeordnet ist.

3. Vorrichtung nach den Ansprüchen 1 oder 2, **dadurch gekennzeichnet, dass** die ringförmige Wand (16) des ringförmigen Raums (15) in einem Abstand d2 zum Raum des Reaktors angeordnet ist, wobei der Abstand d2 von 2% bis 20% des Durchmessers des Reaktors variiert.

4. Vorrichtung nach einem der Ansprüche 1 bis 3, **dadurch gekennzeichnet, dass** die Mischkammer (9) in einem Abstand d1 zum Raum des Reaktors angeordnet ist, wobei der Abstand d1 zwischen 5 und 300 mm beträgt.

5. Vorrichtung nach einem der Ansprüche 1 bis 4, **dadurch gekennzeichnet, dass** die Höhe des ringförmigen Raums (15) zwischen 200 und 800 mm beträgt.

6. Vorrichtung nach einem der Ansprüche 1 bis 5, **dadurch gekennzeichnet, dass** die ringförmige Wand (16) eine Vielzahl von seitlichen Durchgangsquerschnitten (17a, 17b) umfasst, die auf mindestens zwei Ebenen verteilt sind.

7. Vorrichtung nach einem der Ansprüche 1 bis 6, **dadurch gekennzeichnet, dass** die ringförmige Wand (16) des ringförmigen Raums (15) im Wesentlichen zylindrisch ist.

8. Vorrichtung nach einem der Ansprüche 1 bis 7, **dadurch gekennzeichnet, dass** der Querschnitt der Mischkammer (9) ein Parallelogramm ist.

9. Vorrichtung nach Anspruch 8, **dadurch gekennzeichnet, dass** der Querschnitt der Mischkammer (9) ein Verhältnis zwischen der Höhe "h" des Querschnitts und der Breite "l" des Querschnitts zwischen 0,2 und 5,0 aufweist.

10. Vorrichtung nach einem der Ansprüche 1 bis 7, **dadurch gekennzeichnet, dass** die Mischkammer (9) einen kreisförmigen Querschnitt hat und derart ausgeführt ist, dass der Durchmesser "d" der Mischkammer zwischen 0,05 und 0,5 m beträgt.

11. Vorrichtung nach einem der Ansprüche 1 bis 10, **dadurch gekennzeichnet, dass** sie zwei Mischkammern (9) umfasst.

12. Vorrichtung nach einem der Ansprüche 1 bis 11, **dadurch gekennzeichnet, dass** die Mischkammer (9) mindestens ein Mittel zum Ablenken der Fluide an mindestens einer der Innenwände der Mischkammer umfasst.

13. Vorrichtung nach einem der Ansprüche 1 bis 12, **dadurch gekennzeichnet, dass** sie ferner ein Dispersionssystem umfasst, das unter der Verteilungsplatte (12) angeordnet ist, wobei das Dispersionssystem mindestens eine Dispersionsvorrichtung (19) umfasst.

14. Vorrichtung nach einem der Ansprüche 1 bis 13, **dadurch gekennzeichnet, dass** die Mischzone (B) und Verteilungszone (C) durch zwei ringförmige Wände (16) begrenzt sind, jeweils umfassend mindestens einen seitlichen Durchgangsquerschnitt (17a, 17b), der für den Durchgang der Fluide von der Mischzone (B) zur ersten Zone (C1) der Verteilungszone (C) geeignet ist.

15. Nach unten durchströmter katalytischer Reaktor, umfassend einen Raum (1), der mindestens zwei feste Katalysatorbetten (2, 14) einschließt, die durch eine Zwischenzone getrennt sind, umfassend eine Vorrichtung zum Mischen und Verteilen von Fluiden nach einem der Ansprüche 1 bis 14.

**Claims**

1. Device for the mixing and distribution of fluids for a catalytic reactor with a downward flow, said device comprising:

    - at least one collection zone (A) comprising at least one collection means (5);
    - at least one substantially vertical collection line (7) suitable for receiving a reaction fluid collected by said collection means (5) and at least one injection means (8) opening into said collection line (7) for injecting a quench fluid;
    - at least one mixing zone (B), situated downstream of the collection means (5) in the direction of circulation of the fluids, said mixing zone (B) comprising at least one mixing chamber (9) connected to said collection line (7) and an outlet end (10) for removing the fluids;
    - at least one distribution zone (C), situated downstream of said mixing zone (B) in the direction of circulation of the fluids, comprising a distribution plate (12) extending radially over the entire section of the enclosure of the reactor, said distribution plate (12) comprising at least one first zone (C1) supporting a plurality of chimneys (13) and a second zone (C2);

**characterized in that** said mixing zone (B) is comprised in an annular enclosure (15) situated in the distribution zone (C), said mixing (B) and distribution (C) zones being delimited by at least one annular wall (16) comprising at least one lateral passage section (17a, 17b) suitable for the passage of the fluids from said mixing zone (B) to the first zone (C1) of said distribution zone (C), and **in that** the second zone (C2) of said distribution zone (C) comprises a plurality of openings (18) suitable for the partial passage of the fluids out of the distribution zone (C).

2. Device according to claim 1, **characterized in that** said annular enclosure (15) is situated at a distance D from the distribution plate (12) comprised between 50 and 200 mm.

3. Device according to claims 1 or 2, **characterized in that** said annular wall (16) of said annular enclosure (15) is positioned at a distance d2 from the enclosure of the reactor, the distance d2 varying from 2% to 20% of the diameter of the reactor.

4. Device according to any one of claims 1 to 3, **characterized in that** said mixing chamber (9) is positioned at a distance d1 from the enclosure of the reactor, said distance d1 being comprised between 5 and 300 mm.

5. Device according to any one of claims 1 to 4, **characterized in that** the height of said annular enclosure (15) is comprised between 200 and 800 mm.

6. Device according to any one of claims 1 to 5, **characterized in that** the annular wall (16) comprises a plurality of lateral passage sections (17a, 17b) distributed over at least two levels.

7. Device according to any one of claims 1 to 6, **characterized in that** the annular wall (16) of the annular enclosure (15) is substantially cylindrical.

8. Device according to any one of claims 1 to 7, **characterized in that** the cross-section of the mixing chamber (9) is a parallelogram section.

9. Device according to claim 8, **characterized in that** the section of the mixing chamber (9) presents a ratio between the height "h" of the section and the width "w" of said section comprised between 0.2 and 5.0.

10. Device according to any one of claims 1 to 7, **characterized in that** said mixing chamber (9) is of circular section and is such that the diameter "d" of said mixing chamber is comprised between 0.05 and 0.5 m.

11. Device according to any one of claims 1 to 10, **characterized in that** it comprises two mixing chambers (9).

12. Device according to any one of claims 1 to 11, **characterized in that** said mixing chamber (9) comprises at least one means for deflecting the fluids on at least one of the internal walls of said mixing chamber.

13. Device according to any one of claims 1 to 12, **characterized in that** it also comprises a dispersal system arranged below said distribution plate (12), said dispersal system comprising at least one dispersal device (19).

14. Device according to any one of claims 1 to 13, **characterized in that** said mixing (B) and distribution (C) zones are delimited by two annular walls (16) each comprising at least one lateral passage section (17a, 17b) suitable for the passage of the fluids from said mixing zone (B) to the first zone (C1) of said distribution zone (C).

15. Catalytic reactor with a downward flow comprising an enclosure (1) containing at least two fixed catalyst beds (2, 14) separated by an intermediate zone comprising a device for the mixing and distribution of fluids according to any one of claims 1 to 14.

FIG.1

1

(C)

3

6

X

7

8

(B)

18

(C2)

(C1)

2

(A)

H'1

13

5

17b

X'

16

17a

15

D

14

(B)

(C2)

12

**FIG.2**

**FIG.3**

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2824495 A1
- FR 2952835 A1
- FR 2952835